# EUROPEAN PATENT SPECIFICATION

(11) **EP 2 712 856 B1**
(45) Date of publication and mention of the grant of the patent: **24.02.2016**
(21) Application number: 12186743.6
(22) Date of filing: 28.09.2012
(51) Int. Cl.: C07B 59/00, B01J 19/00

(54) **Automated synthesis system for iodine-123-ibzm nuclear medicine**
Automatisches Synthesesystem für Iodin-123-IBZM-Nuklearmedizin
Système de synthèse automatisée pour la médecine nucléaire iodine-123-ibzm

(43) Date of publication of application: 02.04.2014
(73) Proprietor: Institute of Nuclear Energy Research Atomic Energy Council, 325 Taoyuan County (TW)
(72) Inventor: Chang, Chia-Jung, 811 Kaohsiung City (TW); Chou, Wei-Kang, 325 Taoyuan County (TW); Yang, An-Shoei, 325 Taoyuan County (TW); Liao, Mei-Hsiu, 325 Taoyuan County (TW); Shen, Lie-Hang, 325 Taoyuan County (TW)
(74) Representative: Lang, Christian

(56) References cited:
- US-A1- 2009 169 439

## Description

### BACKGROUND OF THE INVENTION

### 1. Field of the Invention

The present invention relates to an automated synthesis system for iodine-123-IBZM nuclear medicine, and particularly to an automated synthesis system for iodine-123-IBZM nuclear medicine, which can automate the processing steps needed for marking, such as oxidation, reduction, neutralization, adsorption, washing and elution etc, and reduce the hand operating time, the exposure dose to radiation, the mistakes and deviations while stabilize the product quality, increase the product yield, and improve the purity.

### 2. Description of Related Art

In general, marked radiopharmaceuticals are still in process of research and development or with traced marking, which is often in manual operation taking easy modification for the process, cost efficiency, and proper radiation exposure dose into the considerations. Once the R & D stage has come to end and the process reaches the standardization which needs for mass production, for the sake of the greatest economic benefit, it needs to make the yield maximal. Meeting the requirement of minimizing the radiation exposure dose in favor of the operators in situ, the automation of the production process becomes more significant and important, solving not only the aforementioned problems but also reducing hand-operating errors or deviations that may occur.

For the radiation iodide reaction which iodine isotopes are carried out in an oxidant-containing buffer solution, the product yield and the radiochemical purity will be affected by the reaction volume, the oxidation time, the adsorption process, washing and elution steps. This may result in poor production, less radiochemical purity, the high production cost and maybe the product cannot be used.

The marking of the radiopharmaceutical drugs, in the case that no automated synthesis system can be used, has no choice but uses the manual operation for the entire process in box of lead shielding with the use of gloves. However, high radioactivity will inevitably result in that the operators are exposed to high radiation dose. Besides, such a complex process cannot allow any robot to replace the manual operation at some delicate steps. On the other hand, the manual operation is easy to cause unintentional errors by operators, deteriorating the stability of product quality. Therefore, there is a need of development of automated synthesis system.

Furthermore, the increase in the yield or total output is one of the approaches to lower the drug cost. It includes increasing the amount of raw materials, but the increase in raw materials tends to enlarge the reaction volume, disadvantageously resulting in reduced product yield, less radiochemical purity, and cannot achieve the purpose of increasing the total output.
US 2009/0169439 A1 discloses an automatic manufacturing device for 1231-ADAM. The manufacturing process for 123I-ADAM consists of four steps: add [123I] ammonium iodide solution, make oxidation reaction occur, terminate the reaction and neutralize the solution, filter and collect the filtrate. The automatic manufacturing device includes a plurality of units for performing each of the four steps that is disposed inside a chassis and is operated by automatic control.

For this reason, the inventors has studied and proceeded in-depth discussion, and actively seek approaches for many years engaged in the research and experiences of related industries and manufacturing. After long-term research and efforts in development, the inventors has finally the successfully developed this invention "an automated synthesis system for iodine- 123-IBZM nuclear medicine" so as to improve the problem encountered in the prior art.

### SUMMARY OF THE INVENTION

A main purpose of this invention is to provide an automated synthesis system for iodine-123-IBZM nuclear medicine includes a control/display means, a reactant supply means connecting to the control/display means; an adsorption means connecting to the control/display means and to the reactant supply means, an oxidation means connecting the control/display means, the reactant supply means and the adsorption means, a product collection means connecting to the control/display means, the reactant supply means, the adsorption means and the oxidation means; a waste liquid collection means connecting to the control/display means, the adsorption means and the product collection means, and a gas filtration means connecting the control/display means, the oxidation means and the product collection means.

In one embodiment of the invention, the control/display means includes a time control unit, a reaction display unit, a reaction time display unit, a pressure setting means, a pressure display unit, a radiation amount display unit and a stop button.

In one embodiment of the invention, the reactant supply means includes at least three oxidant bottles, at least three reductant bottles, at least three neutralizer bottles and at least three cleaner bottles, the oxidant bottles respectively have a first, fourth and seventh valve bodies connecting to the oxidation means, the reductant bottles respectively have a second, fifth and eighth valve bodies connecting to the oxidation means, the neutralizer bottles respectively have a third, sixth and ninth valve bodies connecting to the oxidation means, the cleaner bottles respectively have a 10th, 11th and 12th valve bodies connecting to the adsorption means, and the 10th, 11th and 12th valve bodies interconnect.

In one embodiment of the invention, the adsorption means includes a first adsorption column, a second adsorption column, and a third adsorption column, among the first, second and third adsorption columns 31, 32, 33 are connecting 13th, 14th, 15th, 16th, 17th, 18th, 19th and 20th valve bodies, the 13th, 14th, 15th, 16th, 17th, 18th, 19th and 20th valve bodies connect to one another than connect to the 12th valve body, the 20th further connects to a 21th valve body which connects to the product collection means and the waste liquid collection means.

In one embodiment of the invention, the oxidation means includes a first oxidation bottle, a second oxidation bottle and a third oxidation bottle, the first oxidation bottle connects to the first, second and third valve bodies , the second oxidation bottle connects to the fourth, fifth and sixth valve bodies , the third oxidation bottle connects to the seventh, eighth and ninth valve bodies, among the first, second and third oxidation bottles connect the 24th, 25th and 26th valve bodies, and the 24th valve body along with the 22th and 23the valve bodies connects to the adsorption means.

In one embodiment of the invention, the reactant supply means further connects to the 27th valve body.

In one embodiment of the invention, the gas filter means further connects to the 28th valve body.

### BRIEF DESCRIPTION OF THE DRAWINGS

Fig 1 is a schematic view of a structure according to a first embodiment of the invention.
Fig. 2 is a schematic view of a structure according to a second embodiment of the invention.

### DETAILED DESCRIPTION OF THE PREFERRED EMBODIMENTS

The aforementioned illustrations and following detailed descriptions are exemplary for the purpose of further explaining the scope of the present invention. Other objectives and advantages related to the present invention will be illustrated in the subsequent descriptions and appended tables.

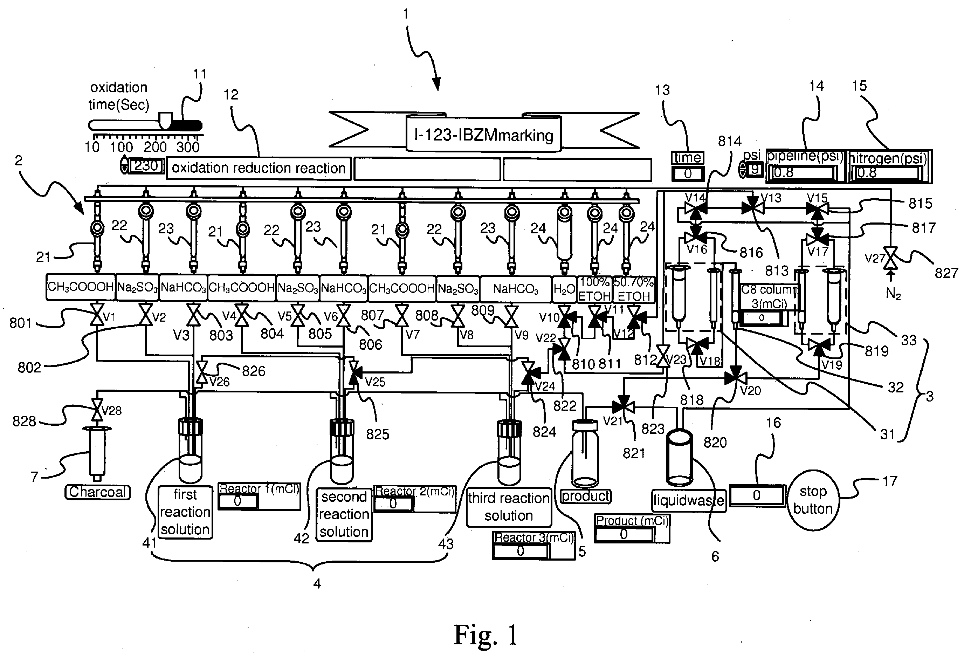

Fig. 1 is a schematic view of a structure of an automated synthesis system for iodine-123-IBZM nuclear medicine according to a first embodiment of the invention. As shown, the automated synthesis system for iodine-123-IBZM nuclear medicine at least includes a control/display means 1, a reactant supply means 2, an adsorption means 3, an oxidation means 4, a product collection means 5; a waste liquid collection means 6, and a gas filtration means 7.

The above control/display means 1 includes a time control unit 11, a reaction display unit 12, a reaction time display unit 13, a pressure setting means 14, a pressure display unit 15, a radiation amount display unit 16 and a stop button 17 for operating, parameter setting, status displaying, and startup/shutdown.

The reactant supply means 2 connects to the control/display means 1, and includes at least three oxidant bottles 21, at least three reductant bottles 22, at least three neutralizer bottles 23 and at least three cleaner bottles 24. The oxidant bottles 21 respectively have a first, fourth and seventh valve bodies 801,804,807 connecting to the oxidation means 4. The reductant bottles 22 respectively have a second, fifth and eighth valve bodies 802,805,808 connecting to the oxidation means 4. The neutralizer bottles 23 respectively have a third, sixth and ninth valve bodies 803,806,809 connecting to the oxidation means 4. The cleaner bottles 24 respectively have a 10th, 11th and 12th valve bodies 810,811,812 connecting to the adsorption means 3. The 10th, 11th and 12th valve bodies 810,811,812 interconnect. The reactant supply means 2 further connects to a 27th valve 827.

The adsorption means 3 connects to the control/display means 1 and the reactant supply means 2, and contains a first adsorption column 31, a second adsorption column 32, and a third adsorption column 33. Among the first, second and third adsorption columns 31, 32, 33 are connecting 13th, 14th, 15th, 16th, 17th, 18th, 19th and 20th valve bodies 813,814,815 816,817,818,819,820. The 13th, 14th, 15th, 16th, 17th, 18th, 19th and 20th valve bodies 813,814,815 816,817,818,819,820 connect to each other and then connects to the 12th valve body 812.

The oxidation means 4 connects to the control/display means 1, the reactant supply means 2 and the adsorption means 3, and includes a first oxidation bottle 41, a second oxidation bottle 42 and a third oxidation bottle 43. The first oxidation bottle 41 connects to the first, second and third valve bodies 801, 802, 803. The second oxidation bottle 42 connects to the fourth, fifth and sixth valve bodies 804,805,806. The third oxidation bottle 43 connects to the seventh, eighth and ninth valve bodies 807,808,809. Among the first, second and third oxidation bottles 41, 42, 43 connect the 24th, 25th and 26th valve bodies 824,825,826. The 24th valve body 824 along with the 22th and 23the valve bodies 822,823 connects to the 13th valve body 813 of the adsorption means 3.

The product collection means 5 connects to the control/display means 1, the reactant supply means 2, the adsorption means 3 and the oxidation means 4, and has a 21th valve body 821 connecting to the 20th valve body 820.

The waste liquid collection means 6 connects to the control/display means 1, the adsorption means 3 and the product collection means 5, and connects to the 21th valve body 821.

The gas filtration means 7 connects to the control/display means 1, the oxidation means 4 and the product collection means 5, and connects to the 28th valve body 828. Thereby, the above structure constitutes a novel automated synthesis system for iodine-123-IBZM nuclear medicine.

When the present invention is in use, the necessary drugs are sequentially injected into the oxidant bottles 21, the reductant bottles 22, neutralizer bottles 23 and cleaner bottles 24 of the reactant supply means 2. Into the first oxidation bottle 41, the second oxidation bottle 42 and the third oxidation bottle 43 of the oxidation means 4, a marking precursor which has been prepared and iodine-123-ammonium iodide radiation source are injected. Then the bottles 41, 42, 43 are placed in the synthesis system, and injection needles are inserted into the connection lines. The first and 27th valve bodies 801,827 are opened for CH₃COOOH injection, and then the first valve body 801 is to close. The fourth valve body 804 is opened for CH₃COOOH injection and then is to close. The seventh valve body 807 is opened for CH₃COOOH injection and then is to close. Then, the oxidation reaction is carried out. The second, fifth and eighth valve bodies 802,805,808 are opened for Na₂SO₄ injection and then are to close so as to carry out the reduction reaction. The third, sixth and ninth valve bodies 803,806,809 are opened for NaHCO₃ injection and then are closed for carrying out neutralization reaction.

During the adsorption, the 28th valve body 828 is closed but the third valve body 803 and the 26th valve body 826, the 25th valve body 825, the 24th valve body 824, the 23th valve body 823, the 16th valve body 816, the 18th valve body 818, the 20th valve body 820, the 15th valve body 815 are opened to inject the reaction solution of the first oxidation bottle 41 into the first adsorption column 31. The reaction solution flows forward to reach the third adsorption column 33 through the second adsorption columns 32. The third valve body 803, the 26th valve body 826, and the 25the valve body 825 are closed. The sixth valve body 806 is opened to inject the reaction solution of the second oxidation bottle 42 into the first adsorption column 31. The reaction solution flows forward to reach the third adsorption column 33 through the second adsorption columns 32. Then the sixth valve body 806 and the 24th valve body 824 are closed, and the ninth valve body 809 is opened. The reaction solution of the third oxidation bottle 43 is injected into the first adsorption column 31 and further flows forward to reach the third adsorption column 33 through the second adsorption columns 32. The15th valve body 815 is closed and the 13th valve body 813 and the 14th valve body 814 are opened to have the reaction solution of the third adsorption column 33 reverse flows through the first adsorption columns 31. Then the 13th valve body 813 and the 14th valve body 814 are closed and the 15th valve body 815 is opened to have the reaction solution of the adsorption column 31 flows forward through the third adsorption column 33. Then open the 9th valve body 809 twice to have the reaction solution of the third oxidation bottle 43 to be injected into the first adsorption column 31 and flow forward to reach the third adsorption column 33 through the second adsorption columns 32. Then the 20th valve body 820 is closed and the 21th valve body 821 is opened to inject the reaction solution into the first adsorption column 31 and have it flow forward to reach the third adsorption column 33 through the second adsorption column 32. The 28th valve body 828, the 9th valve body 809, the 27th valve body 827 and the 23th valve body 823 are closed. Injection water is sequentially injected into each of the reductant bottles 22 and the neutralizer bottles 23. The second valve body and the 27th valve body are opened for the injection water to inject into them, and then the second valve body is to close. The third valve body 803 is opened for the injection water to inject into it, and then it is to close. The fifth valve body is opened for the injection water to inject into it and then it is to close. The 6th valve body 806 is opened for the injection water to inject into it and then it is to close. The 8th valve body is opened for the injection water to inject into it and then it is to close. The 9th valve body 809 is opened for the injection water to inject into it. The 28th valve body 828 is closed while the 9th valve body 809 and the 23th valve body 823 are opened so that the injection water of the third oxidation bottle 43 is injected into the first adsorption column 31 and flows forward to reach the waste liquid collection means 6 through the second adsorption column 32. Then the 9th valve body 809 is closed and the sixth valve body 806 is opened so that the injection water of the second oxidation bottle 42 is injected into the first adsorption column 31 and flows forward to reach the waste liquid collection means 6 through the second adsorption column 32 and the third adsorption column 33. The sixth valve body 806 is closed and the third valve body 803 is opened so that the injection water of the first oxidation bottle 41 is injected into the first adsorption column 31 and flows forward to reach the waste liquid collection means 6 through the second adsorption column 32 and the third adsorption column 33.

When in the washing procedure, the 9th valve body 809, the 23th valve body 823, the 16th valve body 816, the 18th valve body 818 are closed, and the 10th valve body 810, the 17th valve body 817, the 19th valve body 819, the 13th valve body 813, the 20th valve body 820 and the 14th valve body 814 are opened so that the injection water is injected into the third adsorption column 33 and flows reverse to reach the waste liquid collection means 6 through the second adsorption column 32 and the first adsorption column 31 in turns.

Then, the 27th valve body 827 and the 11th valve body 811 are closed, and the injection water is added to one of the cleaner bottles 24. The 15th valve body 815, the 14th valve body 814 and the 20th valve body 820 are closed, and the 27th valve body 827and the 10th valve body 810 are opened so that the injection water is injected into the first adsorption column 31 and flows forward to reach the waste liquid collection means 6 through the second adsorption column 32 and the third adsorption column 33. Then, the 10th valve body 810 is closed, and the 12th valve body 812, the 13th valve body 813, the 20th valve body 820 and the 14th valve body 814 are opened so that 50% ethanol is injected into the third adsorption column 33 and flows reverse to reach the waste liquid collection means 6 through the second adsorption column 32 and then the first adsorption column 31. The 13th valve body 813, the 14th valve body 814 and the 20th valve body 820 are closed and the 15th valve body 815 is opened so that the residual 50% ethanol is injected into the first adsorption column 31 and flows forward to reach the waste liquid collection means 6 through the second adsorption column 32 and the third adsorption column 33. The 27th valve body 827 and the 12th valve body 812 are closed so that 70% ethanol is added to another cleaner bottle 24. Then the 27th valve body 827 and the 12th valve body 812 are opened so that 70% ethanol is injected into the first adsorption column 31 and flows forward to reach the waste liquid collection means 6 through the second adsorption columns 32 and the third adsorption column 33. The 27th valve body and the 12th valve body 812 are closed. The injection water for supplement is added to one of the cleaner bottles 24 Then, the 27th valve body 827 and the 10th valve body 810 are opened so that the injection water is injected into the first adsorption column 31 and flows forward to reach the waste liquid collection means 6 through the second adsorption column 32 and the third adsorption column 33. Then, the 12th valve body 812 is closed, and the 11th valve body 811, the 13th valve body 813, the 20th valve body 820 and the 14th valve body 814 are opened so that 95% ethanol is injected into the third adsorption column 33 and flows reverse through the second adsorption column 32 and then again from the first adsorption column 31 to the waste liquid collection means 6. The 13th valve body 813, the 14th valve body 814 and the 20th valve body 820 are closed, and the 15th valve body 815 is opened so that the residual 95% ethanol is injected into the first adsorption column 31 and flows forward to reach the waste collection means 6 through the second adsorption column 32 and the third adsorption column 33. Then the 27th valve body 827, the 11th valve body 811 and the 21th valve body 821 are closed. The 95% ethanol for supplement is added to another cleaner bottle 24. The 11th valve body 811 is opened so that 95% ethanol is injected into the first adsorption column 31 and flows forward to reach the product collection means 5 through the second adsorption column 32 and the third adsorption column 33. Finally, an appropriate amount of a diluent as needed is added and mixed thoroughly, filtered by a sterile membrane and then dispensed into sterile vacuum bottles.

The present invention has at least the following advantages:
1. Using nitrogen as a driving force to promote the related reaction solution.
2. Using a programmable automatic controller with a counter module to program control and collect signals from a radiation detection module in order to achieve the purpose of detection of radioactivity of majorly initial reaction bottles, affinity columns and collecting bottles.
3. Using A-type relay module along with non-latching single pole single throw (SPST) to control the switching of a two-way or three-way solenoid valve so as to control the flow of the reaction solution.
4. Using a digital to analog conversion module to receive analog voltage signals from a pressure gauge, converting the signals to digital pressure values so as to confirm the pressure value, and using program-controlled gas supply solenoid valve switch for fine-tuning the flow rate of the reaction solution.
5. Carrying out three steps of oxidation, reduction and neutralization of marking reaction and repeating these three steps for the purpose of increased production of a single batch, even under the limited marking reaction volume.
6. Individually performing the washing step and enlarging the affinity column buffer tube needed for the adsorption step for purpose of the increase in total reaction solution volume derived by the increase in batch total output, improved the affinity column adsorption effect and improved final product radiochemical purity.
7. Using LabView program automatic or manual control with a human-machine interface which is concise and easy to operate.

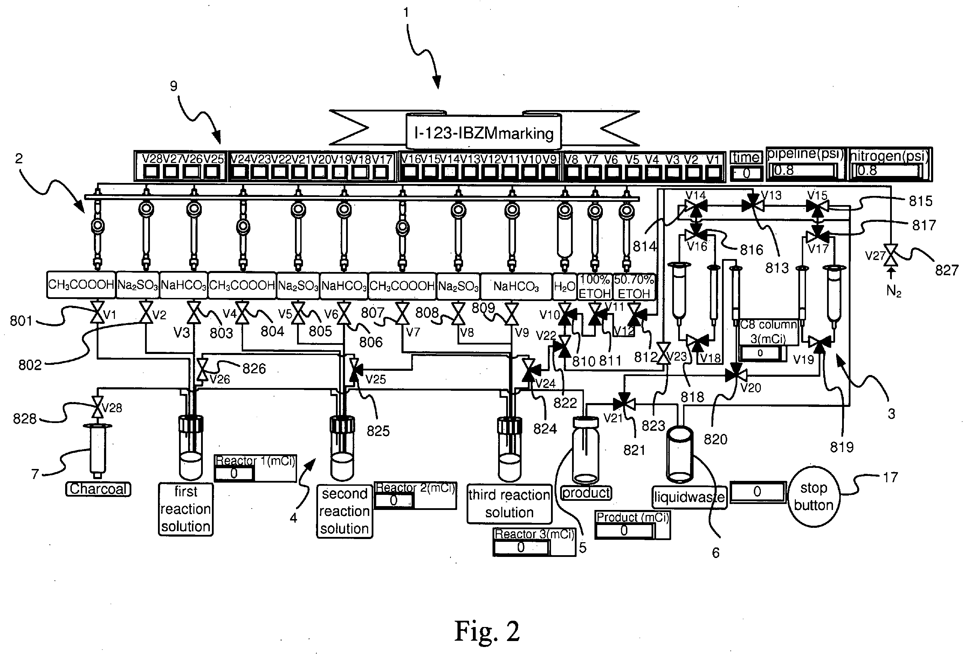

Fig. 2 is a schematic view of a structure of a second embodiment of the present invention. As shown, the present invention can be at, in addition to the first embodiment described above referring to the automatic operation mode, also a manual operation mode of the second embodiment here. The difference is that when in manual operation, the time control unit 11, the reaction display unit 12 and the reaction time display unit 13 of the first embodiment are changed to the buttons 9 for the first valve body to the 28th valve body 801 to 828. In addition, the steps of oxidation, reduction, adsorption, washing and elution etc are controlled by the automatic program. When in manual program, an operator controls the control buttons 9 to control the switching of the first valve body to the 28th valve body 801 to 828 for individual steps. Therefore, during the drug production, the reactant supply means 2, the adsorption means 3, the oxidation means 4, the product collection means 5, the waste liquid collecting means 6, and the gas filtration means 7 etc for both automatic and manual operations are the same. It's mainly for the purpose that if any accidents occur during production, the automatic control can be changed to the manual operation as an alternative to complete all the steps for the drug production automated production when in emergency. Furthermore, this way can be also applied to the maintenance of various components to check whether they are corrupted.

In summary, the automated synthesis system for iodine-123-IBZM nuclear medicine according to the invention effectively improves the various shortages in the prior art. This system can automate the processing steps needed for marking, such as oxidation, reduction, neutralization, adsorption, washing and elution etc, and reduce the hand operating time, the exposure dose to radiation, the mistakes and deviations, while stabilize the product quality, increase the product yield, and improve the purity. This makes the invention more progressive and more practical in use which complies with the patent law.

The descriptions illustrated *supra* set forth simply the preferred embodiments of the present invention; however, the characteristics of the present invention are by no means restricted thereto. All changes, alternations, or modifications conveniently considered by those skilled in the art are deemed to be encompassed within the scope of the present invention delineated by the following claims.

## Claims

1. an automated synthesis system for iodine-123-IBZM nuclear medicine comprising:
a control/display means (1);
a reactant supply means (2) connecting to the control/display means (1);
an adsorption means (3) connecting to the control/display means (1) and to the reactant supply means (2);
an oxidation means (4) connecting to the control/display means (1), the reactant supply means (2) and the adsorption means (3);
a product collection means (5) connecting to the control/display means (1), the reactant supply means (2), the adsorption means (3) and the oxidation means (4);
a waste liquid collection means (6) connecting to the control/display means (1), the adsorption means (3) and the product collection means (5); and
a gas filtration means (7) connecting to the control/display means (1), the oxidation means (4) and the product collection means (5).

2. The system of claim 1, wherein the control/display means (1) comprises a time control unit, a reaction display unit, a reaction time display unit, a pressure setting means, a pressure display unit, a radiation amount display unit and a stop button.

3. The system of claim 1, wherein the reactant supply means (2) comprises at least three oxidant bottles (21), at least three reductant bottles (22), at least three neutralizer bottles (23) and at least three cleaner bottles (24), the oxidant bottles (21) respectively have a first, fourth and seventh valve bodies connecting to the oxidation means (4), the reductant bottles (22) respectively have a second, fifth and eighth valve bodies connecting to the oxidation means (4), the neutralizer bottles (23) respectively have a third, sixth and ninth valve bodies connecting to the oxidation means (4), the cleaner bottles (24) respectively have a 10th, 11th and 12th valve bodies (810, 811, 812) connecting to the adsorption means (3), and the 10th, 11th and 12th valve bodies (810, 811, 812) interconnect.

4. The system of claim 3, wherein the adsorption means (3) comprises a first adsorption column (31), a second adsorption column (32), and a third adsorption column (33), among the first, second and third adsorption columns (31, 32, 33) are connecting 13th, 14th, 15th, 16th, 17th, 18th, 19th and 20th valve bodies (813-820), the 13th, 14th. 15th, 16th, 17th, 18th, 19th and 20th valve bodies (813-820) connect to one another and then connect to the 12th valve body (812), the 20th (820) further connects to a 21th valve body (821) which connects to the product collection means (5) and the waste liquid collection means (6).

5. The system of claim 3, wherein the oxidation means (4) comprises a first oxidation bottle (41), a second oxidation bottle (42) and a third oxidation bottle (43), the first oxidation bottle (41) connects to the first, second and third valve bodies (801, 802, 803), the second oxidation bottle (42) connects to the fourth, fifth and sixth valve bodies (804, 805, 806), the third oxidation bottle (43) connects to the seventh, eighth and ninth valve bodies (807, 808, 809), among the first, second and third oxidation bottles (41, 42, 43) connect the 24th, 25th and 26th valve bodies (824, 825, 826), and the 24th valve body (824) along with the 22th and 23the valve bodies (822, 823) connects to the adsorption means (3).

6. The system of claim 3, wherein the reactant supply means (2) further connects to the 27th valve body (827).

7. The system of claim 3, wherein the gas filtration means (7) further connects to the 28th valve body (828).

## Patentansprüche

1. Automatisches Synthesesystem für Iod-123-IBZM-Nuklear-Arzneimittel mit
einer Kontroll-/ Anzeigevorrichtung (1),
einer Reaktandenzuführvorrichtung (2), die mit der Kontroll-/ Anzeigevorrichtung (1) verbunden ist,
einer Adsorptionsvorrichtung (3), die mit der Kontroll-/ Anzeigevorrichtung (1) und der Reaktandenzuführvorrichtung (2) verbunden ist,
einer Oxidationsvorrichtung (4), die mit der Kontroll-/ Anzeigevorrichtung (1), der Reaktandenzuführvorrichtung (2) und der Adsorptionsvorrichtung (3) verbunden ist,
einer Produktsammelvorrichtung (5), die mit der Kontroll-/ Anzeigevorrichtung (1), der Reaktandenzuführvorrichtung (2), der Adsorptionsvorrichtung (3) und der Oxidationsvorrichtung (4) verbunden ist,
einer Abfallflüssigkeitssammelvorrichtung (6), die mit der Kontroll-/ Anzeigevorrichtung (1), der Adsorptionsvorrichtung (3) und der Produktsammelvorrichtung (5) verbunden ist, und
einer Gasfiltrationsvorrichtung (7), die mit der Kontroll-/ Anzeigevorrichtung (1), der Oxidationsvorrichtung (4) und der Produktsammelvorrichtung (5) verbunden ist.

2. System nach Anspruch 1, bei welchem die Kontroll-/Anzeigevorrichtung (1) eine Zeitkontrolleinheit, eine Reaktionsanzeigeeinheit, eine Reaktionszeitanzeigeeinheit, eine Druckeinstellungsvorrichtung, eine Druckanzeigeeinheit, eine Anzeigeeinheit für die Strahlungsmenge und eine Stopptaste umfasst.

3. System nach Anspruch 1, bei welchem die Reaktandenzuführvorrichtung (2) wenigstens drei Oxidationsmittelflaschen (21), wenigstens drei Reduktionsmittelflaschen (22), wenigstens drei Neutralisationsmittelflaschen (23) und wenigstens drei Reinigungsmittelflaschen (24) umfasst, wobei die Oxidationsmittelflaschen (21) jeweils einen ersten, vierten und siebten Ventilkörper aufweisen, welche mit der Oxidationsvorrichtung (4) in Verbindung stehen, wobei die Reduktionsmittelflaschen (22) jeweils einen zweiten, fünften und achten Ventilkörper aufweisen, welche mit der Oxidationsvorrichtung (4) in Verbindung stehen, wobei die Neutralisationsmittelflaschen (23) jeweils einen dritten, sechsten und neunten Ventilkörper aufweisen, welche mit der Oxidationsvorrichtung (4) in Verbindung stehen, wobei die Reinigungsmittelflaschen (24) jeweils einen 10ten, 11ten und 12ten Ventilkörper (810, 811, 812) aufweisen, welche mit der Adsorptionsvorrichtung (3) in Verbindung stehen, und wobei der 10te, 11 te und 12te Ventilkörper (810, 811, 812) miteinander in Verbindung stehen.

4. System nach Anspruch 3, bei welchem die Adsorptionsvorrichtung (3) eine erste Adsorptionssäule (31), eine zweite Adsorptionssäule (32) und eine dritte Adsorptionssäule (33) umfasst, wobei zwischen der ersten, zweiten und dritten Adsorptionssäule (31, 32, 33) zur Verbindung ein 13ter, 14ter, 15ter, 16ter, 17ter, 18ter, 19ter und 20ster Ventilkörper (813-820) vorgesehen sind, wobei der 13te, 14te, 15te, 16te, 17te, 18te, 19te und 20ste Ventilkörper (813-820) miteinander in Verbindung stehen und außerdem mit dem 12ten Ventilkörper (812) verbunden sind, wobei der 20ste Ventilkörper (820) ferner mit einem 21sten Ventilkörper (821) in Verbindung steht, der mit der Produktsammelvorrichtung (5) und der Abfallflüssigkeitssammelvorrichtung (6) verbunden ist.

5. System nach Anspruch 3, bei welchem die Oxidationsvorrichtung (4) eine erste Oxidationsflasche (41), eine zweite Oxidationsflasche (42) und eine dritte Oxidationsflasche (43) umfasst, wobei die erste Oxidationsflasche (41) mit dem ersten, zweiten und dritten Ventilkörper (801, 802, 803) verbunden ist, wobei die zweite Oxidationsflasche (42) mit dem vierten, fünften und sechsten Ventilkörper (804, 805, 806) verbunden ist, wobei die dritte Oxidationsflasche (43) mit dem siebten, achten und neunten Ventilkörper (807, 808, 809) verbunden ist, wobei zwischen der ersten, zweiten und dritten Oxidationsflasche (41, 42, 43) zur Verbindung ein 24ster, 25ster und 26ster Ventilkörper (824, 825, 826) vorgesehen sind, und wobei der 24ste Ventilkörper (824) durch Zusammenwirken mit dem 22sten und dem 23sten Ventilkörper (822, 823) mit der Adsorptionsvorrichtung (3) verbunden ist.

6. System nach Anspruch 3, bei welchem die Reaktandenzuführvorrichtung (2) ferner mit dem 27sten Ventilkörper (827) verbunden ist.

7. System nach Anspruch 3, bei welchem die Gasfiltrationsvorrichtung (7) ferner mit dem 28sten Ventilkörper (828) verbunden ist.

## Revendications

1. Système de synthèse automatisée pour la médecine nucléaire avec de l'IBZM marqué à l'iode 123 comprenant :
un moyen d'affichage/de commande (1) ;
un moyen de fourniture de réactif (2) relié au moyen d'affichage/de commande (1) ;
un moyen d'adsorption (3) relié au moyen d'affichage/de commande (1) et au moyen de fourniture de réactif (2) ;
un moyen d'oxydation (4) relié au moyen d'affichage/de commande (1), au moyen de fourniture de réactif (2) et au moyen d'adsorption (3),
un moyen de collecte de produit (5) relié au moyen d'affichage/de commande (1), au moyen de fourniture de réactif (2), au moyen d'adsorption (3) et au moyen d'oxydation (4),
un moyen de collecte de déchet liquide (6) relié au moyen d'affichage/de commande (1), au moyen d'adsorption (3) et au moyen de collecte de produit (5) et
un moyen de filtration de gaz (7) relié au moyen d'affichage/de commande (1), au moyen d'oxydation (4) et au moyen de collecte de produit (5).

2. Système selon la revendication 1, le moyen d'affichage/de commande (1) comprenant une unité de contrôle de temps, une unité d'affichage de réaction, une unité d'affichage du temps de réaction, un moyen de réglage de la pression, une unité d'affichage de la pression, une unité d'affichage de la quantité d'irradiation et un bouton d'arrêt.

3. Système selon la revendication 1, le moyen de fourniture de réactif (2) comprenant au moins trois flacons d'oxydant (21), au moins trois flacons d'agent de réduction (22), au moins trois flacons d'agent neutralisant (23) et au moins trois flacons de nettoyant (24), les flacons d'oxydant (21) ayant respectivement un premier, un quatrième et un septième corps de valve reliés au moyen d'oxydation (4), les flacons d'agent de réduction (22) ayant respectivement un second, un cinquième et un huitième corps de valve reliés au moyen d'oxydation (4), les flacons d'agent neutralisant (23) ayant respectivement un troisième, un sixième et un neuvième corps de valve reliés au moyen d'oxydation (4), les flacons de nettoyant (24) ayant respectivement un 10ème, un 11 ème et un 12ème corps de valve (810, 811, 812) reliés au moyen d'adsorption (3) et les 10ème, 11 ème et 12ème corps de valve (810, 811, 812) étant interconnectés.

4. Système selon la revendication 3, le moyen d'adsorption (3) comprenant une première colonne d'adsorption (31), une seconde colonne d'adsorption (32) et une troisième colonne d'adsorption (33) parmi lesquelles la première, la seconde et la troisième colonne d'adsorption (31, 32, 33) sont reliées au 13ème, 14ème, 15ème, 16ème, 17ème, 18ème, 19ème et 20ème corps de valve (813-820), les 13ème, 14ème, 15ème, 16ème, 17ème, 18ème, 19ème et 20ème corps de valve (813-820) sont reliés l'un à l'autre et étant ensuite reliés au 12ème corps de valve (812), le 20ème (820) est de plus relié au 21ème corps de valve (821) qui est relié au moyen de collecte de produit (5) et au moyen de collecte de déchet liquide (6).

5. Système selon la revendication 3, le moyen d'oxydation (4) comprenant un premier flacon d'oxydation (41), un second flacon d'oxydation (42) et un troisième flacon d'oxydation (43), le premier flacon d'oxydation (41) étant relié au premier, au second et au troisième corps de valve (801, 802, 803), le second flacon d'oxydation (42) étant relié au quatrième, au cinquième et au sixième corps de valve (804, 805, 806), le troisième flacon d'oxydation (43) étant relié au septième, au huitième et au neuvième corps de valve (807, 808, 809), parmi lesquels le premier, le second et le troisième flacon d'oxydation (41, 42, 43) sont reliés au 24ème, au 25ème et au 26ème corps de valve (824, 825, 826) et le 24ème corps de valve (824) avec le 22ème et le 23ème corps de valve (822, 823) sont reliés au corps d'adsorption (3).

6. Système selon la revendication 3, le moyen de fourniture de réactif (2) étant de plus relié au 27ème corps de valve (827).

7. Système selon la revendication 3, le moyen de filtration de gaz (7) étant de plus relié au 28ème corps de valve (828).
